# EUROPEAN PATENT SPECIFICATION

(11) **EP 1 575 804 B1**
(45) Date of publication and mention of the grant of the patent: **09.01.2008**
(21) Application number: 03774433.1
(22) Date of filing: 27.11.2003
(51) Int. Cl.: B60R 9/058

(54) **LOAD CARRIER FOOT**
LASTTRÄGERFUSS
ATTACHE DE GALERIE DE TOIT

(30) Priority: 18.12.2002 SE 0203734
(43) Date of publication of application: 21.09.2005
(73) Proprietor: Thule Sweden AB, 330 33 Hillerstorp (SE)
(72) Inventor: ALMHIL, Stefan, SE-562 41 Taberg (SE)
(86) International application number: PCT/SE2003/001832
(87) International publication number: WO 2004/054846

(56) References cited:
- WO-A1-01/00450
- WO-A1-97/49575
- DE-A1- 3 614 740
- DE-A1- 3 729 641
- DE-A1- 10 009 789

## Description

### Technical field

The present invention relates to a load carrier foot for attaching a load carrier bar to a roof edge area of a vehicle, primarily a roof edge area above a vehicle door, which edge area is provided with a first and a second mounting stud, said load carrier foot is provided with a foot part to whose upper section the load carrier bar is attached and whose base section is provided with a first and a second gripping device arranged so that they can be adjusted relative to each other between a first, retracted position, in which they are fitted to the mounting studs for mounting the load carrier foot on the roof edge area, and a second, extended position, in which they are adjusted to engage securely with the mounting studs, wherein the gripping devices are adjusted between the first and the second position by means of a tightening device provided on the foot part.

### State of the art

A load carrier foot of the type described above is already known. One device of this type is shown in patent DE 37 29 641 and another in the applicant's own patent WO 97/49575

However, the load carrier foot described in the German patent is provided with a foot part which, when mounted on the vehicle, is placed on a roof edge surface, primarily in the bottom of the drip rail which was formerly a common feature of cars, and in which the gripping devices are located on link arms mounted pivotably on the foot part and are secured to the mounting studs by means of a tightening device.

The disadvantage of this earlier load carrier foot is that if the roof edge surface and mounting studs are not matched relative to each other and to the load carrier foot, the foot may not be tightened securely enough when mounted on the vehicle. This may easily occur if a foot designed for one car model is used on another model for which it is not designed, the risk of this being greatest when the foot is mounted on a car model where the deviations are not of sufficient order to prevent the foot from being mounted without using excessive force. The problem may, furthermore, occur even if the foot is used on the correct car model, since the relativity between the roof edge surface and the mounting studs may change as the vehicle is subjected to wear.

A further disadvantage is that since the link arms are not attached to the foot part other than by the pivoted mounting, the gripping devices can easily be twisted out of engagement with the mounting studs if the vehicle is subjected to severe retardation, which may occur if it is involved in a collision.

The load carrier foot described in the applicant's own patent WO 97/49575 shows a foot part which does not rest on a roof edge area, but is attached to the vehicle by tightening the gripping devices, which are integral with the foot part, to secure them to the mounting studs. This is achieved by the fact that the foot part of the load carrier foot is designed with a degree of inherent deformability, enabling it to be deformed by a tightening device in such manner that the gripping devices are brought into tightening contact with the mounting studs. The disadvantage of this load carrier foot is that the deformability of the foot causes it to lose strength and become weak, with the result that secure attachment cannot be achieved with this foot either.

Furthermore, both of the previously known load carrier feet suffer from the disadvantage that since the tightening devices are not blocked by any part of the vehicle when the vehicle doors are closed, they are accessible for actuation without any intervention to the vehicle on which they are mounted and can, therefore, be removed easily from the vehicle, making it possible for a dishonest person to steal the load carriers and load without difficulty.

### Problem

Thus, there exists a need to achieve a load carrier foot of the type described in the introduction, which is stable and whose link arms are attached securely to the foot part, and which can be mounted securely on the vehicle, and whose risk of being mounted on a vehicle for which it is not designed is significantly reduced, and whose tightening devices cannot be operated easily when the vehicle doors are closed.

### Solution

The present invention overcomes the disadvantages stated above by means of a load carrier foot of the type described in the introduction, which is characterised in that the first gripping device is attached to a first link arm, which is pivotably mounted on the foot part by means of a pivot pin and that the second gripping device is connected to a second link arm which being permanently attached to the foot part, and in that an actuating device for the tightening device is accessible only from the underside of the foot part.

The present invention is also characterised in that the second link arm is attached by means of rivets.

The present invention is further characterised in that the second link arm is an integral part of the foot part.

The present invention is furthermore characterised in that each of the link arms passes through a slot in the base section of the foot part.

### Description of figures

The invention will hereinafter be described with reference to a preferred embodiment, as shown in the appended figures, of which:
Fig. 1 is a general view of a vehicle with load carrier bars mounted;
Fig. 2 is a detail view of a load carrier foot in accordance with the present invention;
Fig. 3 is a detail view of a load carrier foot attached to a vehicle with the door closed;
Fig. 4 is a view corresponding to Fig. 3, but with the door omitted;
Fig. 5 is a view corresponding to Fig. 4, but in which the foot is shown in the untightened position;
Fig. 6 is a section through A-A in Fig. 3;
Fig. 7 is a section through B-B in Fig. 4.

### Preferred embodiment

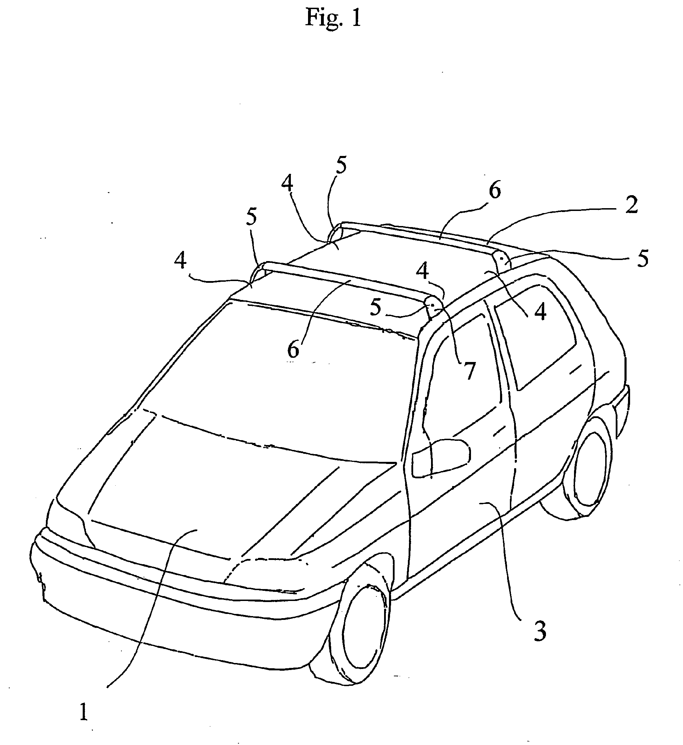

Fig. 1 shows a vehicle 1 with a roof 2 and doors 3. Load carrier feet 5, connected to each other by load carrier bars 6 extending across the roof 2, are mounted on the edge area 4 of the roof.

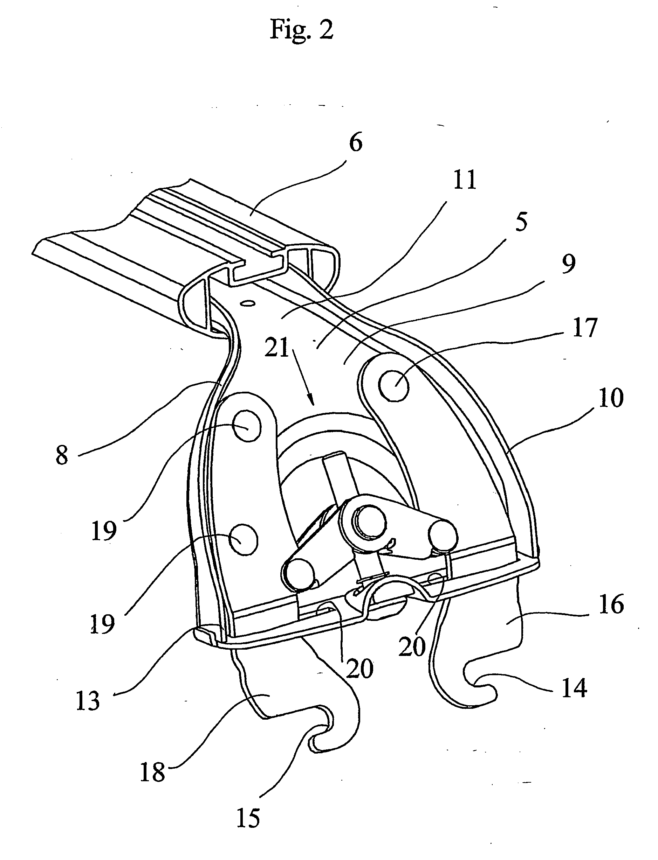

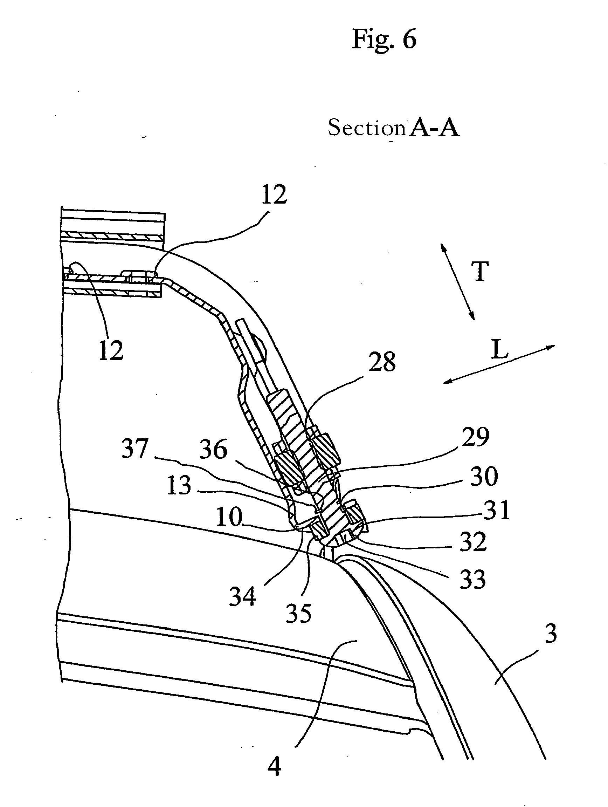

Fig. 2 is a detail view of a load carrier foot 5 in accordance with the present invention, to which part of a load carrier bar 6 is connected. The cover 7, which is shown in Fig. 1 and which covers the internals of the load carrier foot, is omitted from the figure. Since the cover 7 is only a design detail, it will not be described further hereinafter. The load carrier foot 5 comprises a foot part 8 provided with a flat section 9 bordered by a rim 10. At its upper end 11, the foot part 8 is attached to the load carrier bar 6 in known manner by means of rivets 12 (see Fig. 6).

The base section 13 of the foot part is provided with a first gripping device 14 and a second gripping device 15. The first gripping device 14 comprises part of a first link arm 16 pivotably attached to the foot part 8 by means of a first pivot pin 17. The second gripping device 15 is connected to a second link arm 18 which is permanently attached, in known manner, to the foot part 8 by means of rivets 19. It will be clear to one skilled in the art that the arm 18 may consist of a part integral with the foot part 8, in which case it need not be attached to the foot part by rivets. To further ensure that the link arms 16 and 18 respectively are not twisted free of the foot part if the vehicle is involved in a collision, the said arms pass through slots 20 in that part of the rim 10 extending along the base section 13 of the foot part. The figure also shows a tightening device 21.

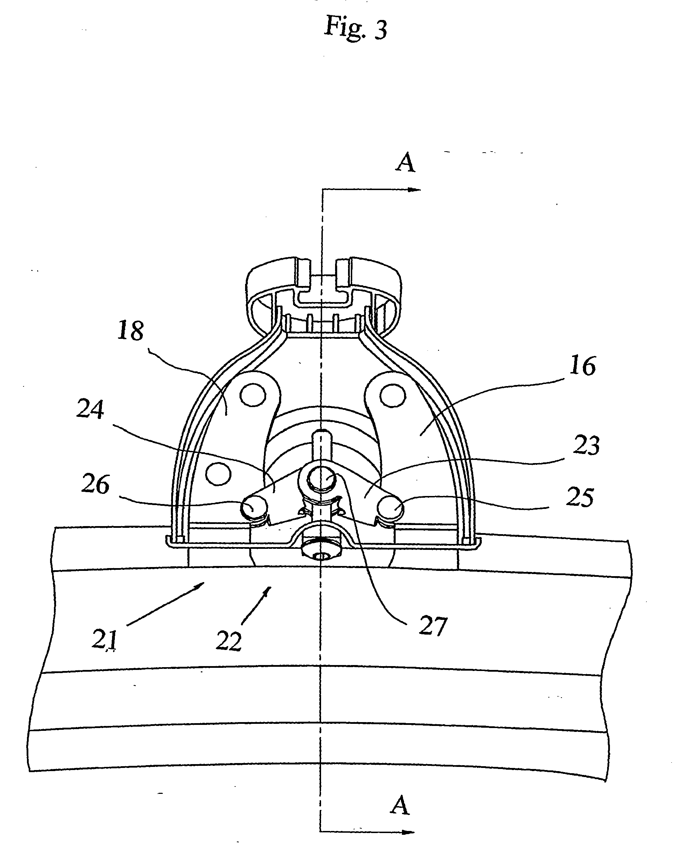

The construction and operation of the tightening device will be described in detail below with reference to Figs. 3-6. As shown in the figures, the tightening device 21 incorporates a linkage 22 consisting of a first link 23 and a second link 24. Link 23 is pivotably attached to the link arm 16 by a first pivot pin 25 and link 24 is pivotably attached to the link arm 18 by a second pivot pin 26. The links 23 and 24 are pivotably attached to each other by a link pin 27. The longitudinal direction of the link pin is indicated by the double arrow L in Fig. 6. The pin is provided with a through, tapped hole 28 whose direction is indicated by the double arrow T and, as shown in Fig. 6, this direction is perpendicular to the longitudinal direction L. A tightening screw 29 is threaded through the tapped hole 28 and further extends through a hole 30 in the rim 10 which extends along the base section 13.

The relationship between the tightening screw 29 and the hole 30 is such that the screw is free to turn in the hole. The tightening screw 29 is provided with an actuating device 31 cohsisting of a screw head 32 with an internal hexagon 33 for turning the tightening screw, which actuating device 31 is accessible only from the underside 34 of the foot part 8.

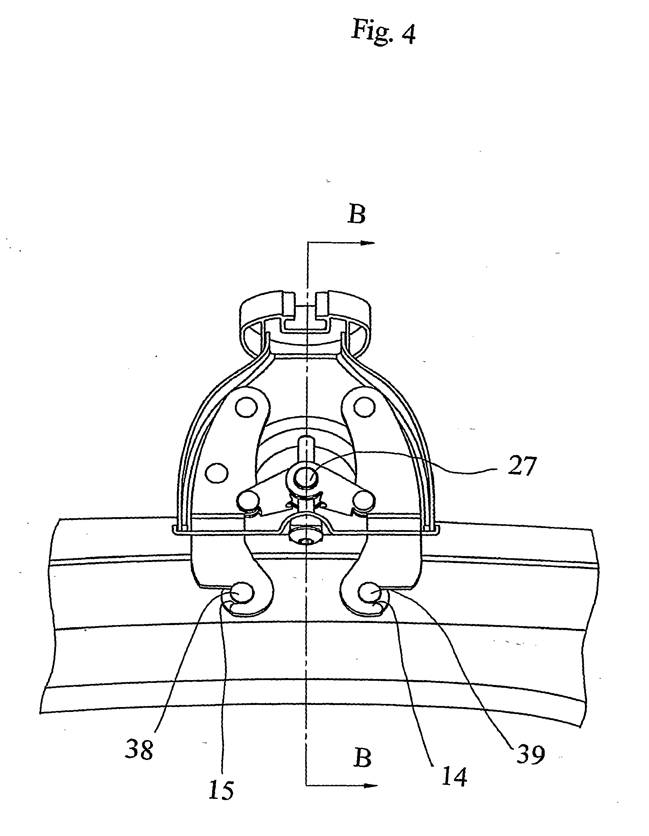

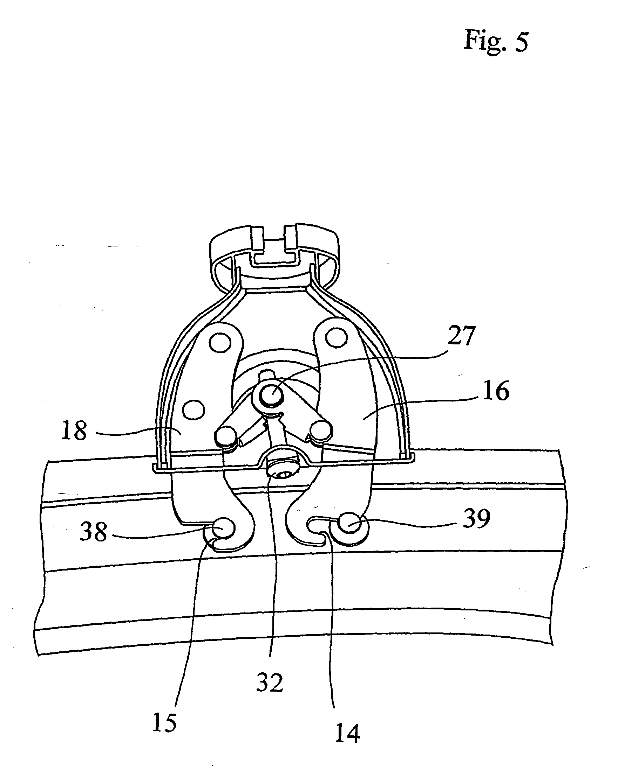

The section of the tightening screw 29 nearest the screw head 32 is unthreaded and a washer 35 is located between the screw head and the rim 10. The section of the screw 29 above the rim 10 is provided with a groove 36 in which a second washer 37 is seated. The washers 35 and 37 prevent the tightening screw 29 from moving axially relative to the rim 10 and the foot part 8 when the tightening screw is turned. Turning the tightening screw causes the link pin 27 to move along the tightening screw and causes the articulated joint, depending on the direction of rotation of the tightening screw, either to move the link arms towards each other to the position shown in Fig. 5 or away from each other to the position shown in Fig. 4.

The mounting of the load carrier foot 5 on the edge area 4 of the vehicle roof will be described in detail below with reference to Figs. 3-7. The link arms 16 and 18 are positioned as shown in Fig. 5 before the load carrier foot 5 is mounted on the roof. In this position, the gripping devices 14 and 15 are retracted towards each other. The roof edge area 4 is provided with a first and a second mounting stud 38 and 39 respectively, which are accessible when the vehicle door 3 is open. In Fig. 5, the vehicle door is swung into the open position and, as a result, is not visible in the figure and, in this position, the gripping devices 14 and 15 engage respectively with the mounting studs 38 and 39.

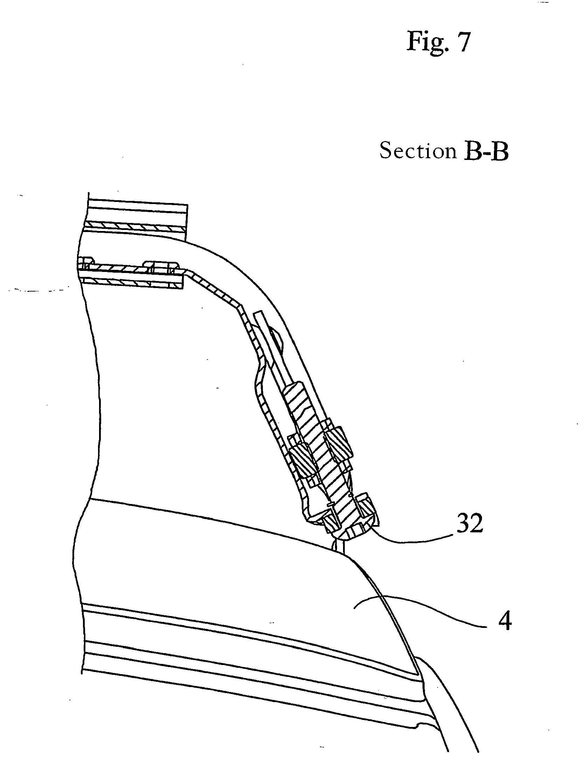

The tightening screw 29 is then turned and since the door 3 is open, the screw head 32 is easily accessible, as is clear from Fig. 7, which is a view through section B-B in Fig. 4. Rotation of the tightening screw 29 causes the link pin 27 of the articulated joint 22 to move downward in the direction of the screw head 32, thereby moving the link arms 16 and 18 relative to each other into the position shown in Fig. 4, in which position the gripping devices 14 and 15 are tightened securely against the studs 38 and 39 respectively. The door 3 is then closed and the gripping devices are concealed behind the door in the manner shown in Fig. 3, while the screw head 32 is blocked by the door 3 as shown in Fig. 6, substantially eliminating the possibility of turning the screw head, while the foot 5 is attached securely to the mounting studs.

In the above, the link arm 18 is described as being permanently attached to the foot part 8 by means of rivets 19; however, it will be clear to one skilled in the art that this arm may also be attached pivotably to the foot part, preferably by means of a pivot pin in the same location as the upper rivet 19.

## Claims

1. Load carrier foot (5) for attaching a load carrier bar (6) to a roof edge area (4) of a vehicle (1), primarily a roof edge area above a vehicle door (3), which edge area is provided with a first and a second mounting stud (38, 39), said load carrier foot (5) is provided with a foot part (8) to whose upper section (11) the load carrier bar (6) is attached and whose base section (13) is provided with a first and a second gripping device (14, 15) arranged so that they can be adjusted relative to each other between a first, retracted position, in which they are fitted to the mounting studs for mounting the load carrier foot (5) on the roof edge area, and a second, extended position, in which they are adjusted to engage securely with the mounting studs, wherein the gripping devices are adjusted between the first and the second position by means of a tightening device (21) provided on the foot part (8), **CHARACTERIZED IN THAT** the first gripping device (14) is attached to a first link arm (16), which is pivotably mounted on the foot part (8) by means of a pivot pin (17) and that the second gripping device (15) is connected to a second link arm (18) which being permanently attached to the foot part (8), and **in that** an actuating device (31) for the tightening device (21) is accessible only from the underside (34) of the foot part (8).

2. Load carrier foot (5) according to claim 1 **CHARACTERIZED IN THAT** the second link arm (18) is attached by means of rivets (19).

3. Load carrier foot (5) according to claim 1 **CHARACTERIZED IN THAT** the second link arm (18) is an integral part of the foot part (8).

4. Load carrier foot (5) according to any of the preceding claims **CHARACTERIZED IN THAT** each link arm passes through a slot (20) in the base section (13) of the foot part (8).

## Patentansprüche

1. Lastträgerfuß (5) zum Befestigen einer Lastträgerstange (6) an einem Dachkantenbereich (4) eines Fahrzeugs (1), hauptsächlich einem Dachkantenbereich über einer Tür (3) eines Fahrzeugs, wobei der Dachkantenbereich mit einem ersten und einem zweiten Fixierbolzen (38, 39) versehen ist, der Lastträgerfuß (5) mit einem Fußteil (8) versehen ist, an dessen oberem Abschnitt (11) die Lastträgerstange (6) befestigt ist und dessen Basisabschnitt (13) mit einer ersten und einer zweiten Greifvorrichtung (14, 15) versehen ist, die so angeordnet ist, dass sie jeweils zueinander zwischen einer ersten, zurückgezogenen Stellung, in der sie an den Befestigungsbolzen zum Befestigen des Lastträgerfußes (5) an dem Dachkantenbereich anliegen, und einer zweiten, ausgestreckten Stellung, in der sie verstellt sind, um sicher mit den Befestigungsbolzen in Eingriff zu gelangen, verstellt werden können, wobei die Greifvorrichtungen mittels einer auf dem Fußteil (8) vorgesehenen Straffungsvorrichtung (21) zwischen einer ersten und einer zweiten Stellung verstellt werden, **dadurch gekennzeichnet, dass** die erste Greifvorrichtung (14) an einem ersten Verbindungsarm (16) befestigt ist, welcher mittels eines Drehzapfens (17) schwenkbar an dem Fußteil (8) befestigt ist, und dass die zweite Greifvorrichtung (15) mit einem zweiten, permanent an dem Fußteil (8) befestigten Verbindungsarm (18) verbunden ist, und dass eine Betätigungsvorrichtung (31) für die Straffungsvorrichtung (21) lediglich von der Unterseite (34) des Fußteils (8) zugänglich ist.

2. Lastträgerfuß (5) nach Anspruch 1, **dadurch gekennzeichnet, dass** der zweite Verbindungsarm (18) mittels Nieten (19) befestigt ist.

3. Lastträgerfuß (5) nach Anspruch 1, **dadurch gekennzeichnet, dass** der zweite Verbindungsarm (18) integraler Bestandteil des Fußteils (8) ist.

4. Lastträgerfuß (5) nach einem der vorherigen Ansprüche, **dadurch gekennzeichnet, dass** jeder Verbindungsarm durch einen Schlitz (20) im Basisabschnitt (13) des Fußteils (8) verläuft.

## Revendications

1. Pied de galerie de toit (5) pour attacher une barre de porte-charge (6) à une région de bord de toit (4) d'un véhicule (1), principalement une région de bord de toit située au-dessus d'une porte de véhicule (3), cette région de bord comportant un premier et un deuxième goujons de montage (38, 39), le dit pied de galerie (5) comprenant un pied (8) à la région supérieure (11) duquel la barre de porte-charge (6) est attachée et dont la région de base (13) est pourvue d'un premier et d'un deuxième dispositifs de prise (14, 15) agencés de sorte qu'ils peuvent être réglés l'un par rapport à l'autre à une première position rétractée, dans laquelle ils sont montés sur les goujons de montage pour fixer le pied de galerie (5) sur la région de bord de toit, et une deuxième position en extension dans laquelle ils sont réglés pour venir en prise de façon sûre avec les goujons de montage, les dispositifs de prise étant réglés entre les première et deuxième positions au moyen d'un dispositif de serrage (21) prévu sur le pied (8), **caractérisé en ce que** le premier dispositif de prise (14) est attaché à un premier bras de liaison (16) qui est monté de façon pivotante sur le pied (8) au moyen d'un axe de pivot (17), **en ce que** le deuxième dispositif de prise (15) est relié à un deuxième bras de liaison (18) qui est fixé de façon permanente au pied (8), et **en ce qu'**un dispositif de manoeuvre (31) pour le dispositif de serrage (21) est accessible seulement par le dessous (34) du pied (8).

2. Pied de galerie (5) selon la revendication 1, **caractérisé en ce que** le deuxième bras de liaison (18) est attaché au moyen de rivets (19).

3. Pied de galerie (5) selon la revendication 1, **caractérisé en ce que** le deuxième bras de liaison (18) est une partie solidaire du pied (8).

4. Pied de galerie (5) selon une quelconque des revendications précédentes, **caractérisé en ce que** chaque bras de liaison passe dans une fente (20) de la partie de base (13) du pied (8).
